# EUROPÄISCHE PATENTSCHRIFT

(11) **EP 0 515 351 B1**
(45) Veröffentlichungstag und Bekanntmachung des Hinweises auf die Patenterteilung: **29.03.1995**
(21) Anmeldenummer: 92890118.0
(22) Anmeldetag: 19.05.1992
(51) Int. Cl.: A01K 1/015

(54) **Streu für die Tierhaltung**
Animal litter
Litière pour animaux

(30) Priorität: 22.05.1991 AT 1046/91
(43) Veröffentlichungstag der Anmeldung: 25.11.1992
(73) Patentinhaber: Bogner, Franz, A-1100 Wien (AT)
(72) Erfinder: Bogner, Franz, A-1100 Wien (AT)
(74) Vertreter: Weinzinger, Arnulf, Dipl.-Ing.

(56) Entgegenhaltungen:
- EP-A- 0 022 010

## Beschreibung

Die vorliegende Erfindung betrifft eine Streu für die Tierhaltung, insbesondere Kleintierhaltung, z.B. Katzen, oder landwirtschaftliche Tierhaltung.

Im allgemeinen tritt sowohl bei der landwirtschaftlichen Tierhaltung als auch bei der Haltung von Haustieren das Problem der Geruchsbelästigung und, insbesondere bei Haustieren, der Beseitigung von Kot und Urin auf. Während bei Großtieren die Geruchsbelästigung kaum zu lösen ist und die Ausscheidungen als nützlicher Dünger auf die Felder aufgebracht werden können, ist bei Kleintieren, also Haustieren, wie Katzen, die Verwendung von geruchsadsorbierender Streu wünschenswert. Die verschmutzte Streu stellt bei der Abfallbeseitigung aber ein Problem dar, da sie meist aus wasser- und geruchsbindenden Mineralien, beispielsweise adsorbierenden Erden, Kieselerde oder Sepiolith, besteht und nicht vollständig entsorgt werden kann.

Aufgabe der vorliegenden Erfindung ist nun, die bei der Tierhaltung auftretende Geruchsbelästigung zu unterbinden.

Diese Aufgabe wird erfindungsgemäß dadurch gelöst, daß die Streu aus trockenem, angerottetem oder verrottetem Traubentrester besteht oder diesen enthält. Nach der Verwendung bildet diese Streu, die im wesentlichen geruchslos bleibt, dann ohne weitere Vorbehandlung einen vorzüglichen Dünger, da ja der verrottete Trester selbst bereits ein Düngemittel darstellt.

Ein weiterer Vorteil der Erfindung liegt in der Verwertung des Traubentresters an sich:

Bei der Traubenpresse fallen in Österreich jährlich etwa 80000 t Traubentrester mit einem Wassergehalt von durchschnittlich 50 % an, und dieser Traubentrester stellte bislang in der Regel lästigen Abfall dar, dessen Entsorgung einen nicht unerheblichen zeitlichen und finanziellen Aufwand bedingte. Es wurden zwar bereits verschiedene Verwendungsmöglichkeiten des verrotteten Tresters vorgeschlagen, jedoch erwiesen sich diese Vorschläge in der Praxis als nicht zielführend. Unter anderem wurde auch die mögliche Verwendung der Kernschrotmittelfraktion als Kompostaktivator und Substrat für Humusklosetts erwähnt (Vortrag von Edgar Cabela, gehalten anläßlich der "Jornadas Cientifico-Técnicas del Instituto Hispano Austriaco" am 12. 3. 1982 in Barcelona und 15. 3. 1982 in Madrid, OEFZS BER. No.4152).

EP-A-0022010 erwähnt die Verwendung getrockneter Traubenpulpe als Tierstreu.

Gemäß einer bevorzugten Ausführungsform liegt der verrottete Traubentrester in zerkleinerter Form vor. Durch die Zerkleinerung des verrotteten Traubentrester wird ein verbessertes Geruchsadsorptionsvermögen der Streu gewährleistet.

Günstig ist auch, wenn der Traubentrester an sich bekannter Streu, wie beispielsweise Stroh, adsorbierenden Erden, Kieselerde oder Sepiolith, beigemengt ist. Dadurch steigt die Geruchsadsorption der Streu, wobei gleichzeitig eventuell vorhandene handelsübliche Streu weiterverwendet werden kann. Auch kann billige Streu durch Beimengung von trockenem, verrottetem Traubentrester verbessert werden.

Weiters ist vorteilhaft, wenn die erfindungsgemäße Streu für die Kleintierhaltung, insbesondere für Katzen, verwendet wird. Die Trestermasse hat eine saugende und langanhaltende geruchsvermindernde Eigenschaft und darüberhinaus durch die bei der Verrottung gebildeten Huminsäuren einen angenehmen Eigengeruch nach Waldboden. Ein weiterer Vorteil ist, daß die Streu nach Gebrauch, mit Kot und Urin angereichert, in die Natur rückführbar ist. Dies kann entweder durch Sammeln in Biotonnen oder direkt als hervorragender Dünger für Zimmerpflanzen geschehen.

Gemäß einer weiteren vorteilhaften Ausführungsform der vorliegenden Erfindung wird die erfindungsgemäße Streu für die landwirtschaftliche Tierhaltung verwendet. Die bei der Großtierhaltung auftretende Geruchsbelästigung entfällt dabei praktisch zur Gänze und der anfallende Dünger kann, wenn er nicht sofort verwendet wird, im wesentlichen geruchlos gelagert werden.

## Patentansprüche

1. Streu für die Tierhaltung, insbesondere Kleintierhaltung, z.B. Katzen, oder landwirtschaftliche Tierhaltung, dadurch gekennzeichnet, daß sie aus trockenem, angerottetem oder verrottetem Traubentrester besteht oder diesen enthält.

2. Streu nach Anspruch 1, dadurch gekennzeichnet, daß der verrottete Traubentrester in zerkleinerter Form vorliegt.

3. Streu nach Anspruch 1 oder 2, dadurch gekennzeichnet, daß der Traubentrester an sich bekannter Streu, wie beispielsweise Stroh, adsorbierenden Erden, Kieselerde oder Sepiolith, beigemengt ist.

## Claims

1. A litter for the keeping of animals, in particular for the keeping of domestic animals, e.g. cats, or for the keeping of farm animals, characterised in that it is comprised of the dry, partially rotted or completely rotted marc of grapes or contains the same.

2. A litter according to claim 1, characterised in that the rotted marc of grapes is present in comminuted form.

3. A litter according to claim 1 or 2, characterised in that the marc of grapes is admixed to a litter known per se, such as e.g. straw, adsorbing earths, silica or sepiolite.

## Revendications

1. Litière pour animaux en particulier pour de petits animaux tels que des chats ou autres animaux de compagnie, caractérisée en ce qu'elle est constituée ou contient des rafles de raisins sèches en cours de décomposition ou décomposées.

2. Litière pour animaux selon la revendication 1, caractérisée en ce que les rafles de raisins décomposées se présentent sous une forme réduite.

3. Litière pour animaux selon la revendication 1 ou 2 en ce que les rafles de raisins sont mêlées à une litière connue telle de la paille, une terre absorbante, une terre siliceuse ou de l'écume de mer.
